# EUROPÄISCHE PATENTSCHRIFT

(11) **EP 3 625 878 B1**
(45) Veröffentlichungstag und Bekanntmachung des Hinweises auf die Patenterteilung: **05.04.2023**
(21) Anmeldenummer: 18724835.6
(22) Anmeldetag: 11.05.2018
(51) Int. Cl.: H02K 5/04, H02K 5/22, H02K 7/116, F02M 26/54, F02M 26/66, F02M 26/72

(54) **STELLVORRICHTUNG FÜR EINE VERBRENNUNGSKRAFTMASCHINE**
ACTUATING DEVICE FOR AN INTERNAL COMBUSTION ENGINE
DISPOSITIF DE RÉGLAGE POUR UN MOTEUR À COMBUSTION INTERNE

(30) Priorität: 15.05.2017 DE 102017110489
(43) Veröffentlichungstag der Anmeldung: 25.03.2020
(73) Patentinhaber: Pierburg GmbH, 41460 Neuss (DE)
(72) Erfinder: WAGNER, Michael, 40589 Düsseldorf (DE); TURAN, Alper, 50969 K ln (DE); SARI, Osman, 41516 Grevenbroich (DE)
(74) Vertreter: terpatent Patentanwälte ter Smitten Eberlein-Van Hoof Rütten Daubert
(86) Internationale Anmeldenummer: PCT/EP2018/062183
(87) Internationale Veröffentlichungsnummer: WO 2018/210689

(56) Entgegenhaltungen:
- EP-A1- 2 224 579
- DE-A1-102013 101 938
- DE-A1-102013 101 938
- US-A1- 2009 155 101

## Beschreibung

Die vorliegende Erfindung betrifft eine Stellvorrichtung für eine Verbrennungskraftmaschine umfassend ein erstes Gehäuseteil, einen Antriebsmotor, welcher in dem ersten Gehäuseteil in einer axialen und einer radialen Richtung gelagert ist, ein Zwischengehäuseelement, über dass der Antriebsmotor elektrisch kontaktiert ist, und ein zweites Gehäuseteil, in dem ein Raum mit einer offenen Seite ausgebildet ist.

Derartige Stellvorrichtungen dienen zum Antrieb unterschiedlicher Aggregate in einer Verbrennungskraftmaschine. Ein solches Aggregat kann beispielsweise eine Abgasklappe oder ein Ventil sein. Die Stellvorrichtung wird gewöhnlich an Orten eingesetzt, an denen Schmutz auftritt. Dadurch besteht die Gefahr, dass dieser Schmutz in die Stellvorrichtung eindringt und den Verschleiß innerhalb der Stellvorrichtung erhöht. Dies führt dazu, dass die Stellvorrichtung frühzeitig ausfällt. Um dies zu vermeiden ist es bekannt, das Gehäuse der Stellvorrichtung mit einer Dichtung zu versehen.

Die DE 10 2009 010 424 A1 offenbart einen Kfz-Aggregat-Elektromotor, welcher beispielsweise für eine Stellvorrichtung zum Stellen eines Abgasrückführungs-Ventils eingesetzt werden kann. Der Kfz-Aggregat-Elektromotor weist ein Motorgehäuse auf, an dem an einem zu einer Flanschfläche entgegengesetzten Ende eine Ausnehmung angeordnet ist, in der eine Ausstülpung eines Elektromotors aufgenommen und in radialer Richtung gelagert ist. An einem zur der Ausstülpung entgegengesetzten Seite des Elektromotors ist innerhalb des Motorgehäuses eine Abschlussplatte angeordnet mit der der Elektromotor zusammen an dem Motorgehäuse in axialer Richtung verschraubt ist und über die der Elektromotor elektrisch kontaktiert ist. Das derart fertig gestellt Kfz-Aggregat-Elektromotor ist beispielsweise an ein Stellergehäuse angeschraubt.

Aus der US2009/0155101 A1 ist ein Scrollkompressor bekannt, an dessen zum Laufrad entgegengesetzten Ende ein Zwischengehäuseteil, welches Elektronikbauteile trägt, zwischen dem Motorgehäuse und einem die Elektronik verschließenden Deckel befestigt wird, indem der Deckel, das Motorgehäuse und das Zwischengehäuse ein gleiches Lochmuster aufweisen.

Zusätzlich ist aus der DE 10 2013 101 938 A1 eine Stellvorrichtung für ein Ventil bekannt, dessen Ventilgehäuse gleichzeitig als Getriebegehäuseteil dient und durch ein Zwischengehäuseelement, welches ebenfalls den Getrieberaum begrenzt und den Elektromotor trägt, geschlossen wird. Hierzu weisen das Ventilgehäuse und das Zwischengehäuse ein gleiches Lochmuster auf.

Des Weiteren offenbart die DE 10 2013 102 549 A1 ein Abgasrückführventil mit einem elektromotorischen Aktor. Das Gehäuse ist zweiteilig ausgebildet, wobei ein Gehäuseteil das Getriebe und das Ventil aufnimmt und das andere Gehäuseteil den Elektromotor aufnimmt. Die beiden Gehäuseteile werden über zueinander gewandte Flanschflächen aneinander mittels Schrauben befestigt.

Die DE 20 2006 014 817 U1 offenbart eine Stellvorrichtung zur Sitzverstellung mit einem dreiteiligen Gehäuse, was aus einem Motorgehäuse, einen Getriebegehäuse und einen Getriebedeckel besteht, die aneinander befestigt sind. Der Stecker des Antriebsmotors ist an der zum Getriebegehäuse entgegengesetzten Seite angeordnet.

Ausgehend von dem Stand der Technik besteht ein stetiges Interesse daran, eine Stellvorrichtung bereitzustellen, welche wirtschaftlicher herstellbar ist. Die Wirtschaftlichkeit einer solchen Stellvorrichtung wird dabei von verschiedenen Faktoren beeinflusst, wie der Anzahl der Teile, der Komplexität der Teile und wie einfach die Teile zusammengebaut werden können.

Die Aufgabe der vorliegenden Erfindung liegt somit darin, eine Stellvorrichtung für eine Verbrennungskraftmaschine zu schaffen, welche einfacher und wirtschaftlicher herstellbar ist.

Diese Aufgabe wird durch eine Stellvorrichtung für eine Verbrennungskraftmaschine mit den Merkmalen des Anspruchs 1 gelöst.

Bei der erfindungsgemäßen Stellvorrichtung weist das erste Gehäuseteil, das zweite Gehäuseteil und das Zwischengehäuseelement korrespondierende Öffnungen mit einem einheitlichen Lochmuster auf, wobei das erste Gehäuseteil mit dem zweiten Gehäuseteil unter Zwischenlage des Zwischengehäuseelementes miteinander verschraubt sind, wobei das Zwischengehäuseelement den Raum des zweiten Gehäuseteils, in dem ein Getriebe der Stellvorrichtung angeordnet ist, zu der offenen Seite begrenzt. Eine Bestromung des Antriebsmotors kann somit direkt über das Zwischengehäuseelement erfolgen. Zusätzliche Herstellungskosten und Lagerkosten für zusätzliche Teile können dadurch eingespart werden, so dass die Stellvorrichtung wirtschaftlicher hergestellt werden kann. Unter einem einheitlichen Lochmuster im Sinne der Erfindung ist eine gleiche Anordnung der Löcher zu verstehen, so dass die Löcher nach einem Zusammenbau der Gehäuseteile in Überdeckung gebracht werden. Über das einheitliche Lochmuster, können alle drei Gehäuseteile somit auf einmal miteinander verschraubt werden, so dass der Zusammenbau vereinfacht wird. Dadurch ist die Stellvorrichtung einfacher und wirtschaftlicher herstellbar. Über das Getriebe ist es möglich, ein Drehmoment des Antriebsmotors in eine Stellbewegung des Betätigungsorgans zu transformieren. Als Getriebe wird dabei vorzugsweise ein Stirnradgetriebe verwendet.

In einer bevorzugten Ausführung der Erfindung weist der Antriebsmotor an einem proximalen axialen Ende eine Befestigungsplatte auf, über welche der Antriebsmotor an einem Befestigungsflanschabschnitt des ersten Gehäuseteils, welcher im Inneren des ersten Gehäuseteils ausgebildet ist, in axialer Richtung verschraubt ist. Dadurch wird der Antriebsmotor in axialer Richtung im ersten Gehäuseteil fixiert.

In einer weiteren bevorzugten Ausführung der Erfindung weist der Antriebsmotor an einem distalen axialen Ende einen durch ein Lager des Antriebsmotors gebildeten Vorsprung auf, der in einer Vertiefung des ersten Gehäuseteils aufgenommen und radial gehalten ist. Der Antriebsmotor kann dadurch auf einfache Weise in seiner radialen Beweglichkeit eingeschränkt werden.

Zwischen dem Vorsprung des Antriebsmotors und der Vertiefung ist vorzugsweise ein Dämpfungselement angeordnet. Der Vorsprung des Antriebsmotors liegt somit nicht direkt an der Vertiefung an, so dass ein aneinander schlagen des Vorsprungs und der Vertiefung vermieden wird. Die radialen Bewegungen werden zudem durch das Dämpfungselement aufgenommen und gedämpft, Als Dämpfungselement wird dabei vorzugsweise ein elastisches ringförmiges Bauteil verwendet.

Vorteilhaft ist es, wenn im ersten Gehäuseteil, um die Vertiefung, eine Wellfeder angeordnet ist, welche in einer axialen Richtung des Antriebsmotors vorgespannt ist. In einem zusammengebauten Zustand drückt die Wellfeder den Antriebsmotor somit in Richtung des zweiten Gehäuseteils. Dadurch wird der Antriebsmotor in dem Gehäuse verspannt, so dass Relativschwingungen zwischen dem ersten Gehäuseteil und dem Antriebsmotor weiter reduziert werden.

In einer bevorzugten Ausgestaltung ist das erste Gehäuseteil einteilig ausgebildet. Das erste Gehäuseteil wird somit aus einem Stück gefertigt, so dass die Teilezahl der Stellvorrichtung reduziert und die Stellvorrichtung wirtschaftlicher herstellbar ist. Zudem wird durch ein einteiliges Gehäuseteil die Steifigkeit des Gehäuses erhöht, so dass Schwingungen besser aufgenommen werden können.

In einer bevorzugten Weiterbildung der Erfindung ist das erste Gehäuseteil aus Aluminium gebildet. Aluminium hat den Vorteil, dass dieses Material eine hohe Wärmeleitfähigkeit bei einer guten Steifigkeit des aus diesem Material hergestellten ersten Gehäuseteils hat. Dadurch kann ein Gehäuse gebildet werden, welches sehr gut die Wärme des Antriebsmotors abführt und trotzdem eine gute Schwingungsaufnahme hat. Da Aluminium im Verhältnis zu seiner Festigkeit ein relativ leichtes Material ist, kann zudem das Gewicht der Stellvorrichtung reduziert werden.

In einer bevorzugten Ausführung der Erfindung ist am Zwischengehäuseelement eine Buchse für einen Stecker ausgebildet. Über diese Buchse, welche außerhalb des durch das erste Gehäuseteil, das zweite Gehäuseteil und das Zwischengehäuseelement begrenzten Raums angeordnet ist, können das Zwischengehäuseelement und damit der Antriebsmotor bestromt werden. Die Buchse kann dabei vorzugsweise in verschiedenen Richtungen ausgerichtet sein, um den verschiedenen Einbaugegebenheiten Rechnung zu tragen, ohne dass die Form des ersten oder zweiten Gehäuseteils geändert werden müsste.

Besonders vorteilhaft ist es, wenn das Zwischengehäuseelement aus Kunststoff gebildet ist. Die Herstellung des Gehäuses aus Kunststoff führt zu geringeren Materialkosten, wodurch die Stellvorrichtung wirtschaftlicher herstellbar ist. Darüber hinaus hat Kunststoff ein geringeres Gewicht als Metall, so dass auch das Gewicht der Stellvorrichtung reduziert wird. Vorzugsweise kann als Kunststoff auch ein faserverstärkter Kunststoff Verwendung finden, um eine noch höhere Festigkeit des Zwischengehäuseelementes zu erreichen. Zudem kann über ein solches Zwischengehäuseelement aus Kunststoff eine schwingungsdämpfende Wirkung erzielt werden, insbesondere zwischen zwei festen Metallgehäusen.

Vorteilhafterweise ragt ein Antriebsritzel des Antriebsmotors durch das Zwischengehäuseelement in das zweite Gehäuseteil. Das Zwischengehäuseelement weist somit eine Öffnung für das Antriebsritzel auf. Dadurch ist es trotz erfindungsgemäßer Anordnung des Zwischengehäuseelementes möglich, ein in das zweite Gehäuseteil ragendes Betätigungsorgan anzutreiben.

In einer bevorzugten Ausgestaltung der Erfindung weisen das erste und zweite Gehäuseteil jeweils eine Flanschfläche, in der die korrespondierenden Öffnungen angeordnet sind, auf, welche unter Zwischenlage einer Dichtung an einer zu dem jeweiligen Gehäuseteil weisenden Fläche des Zwischengehäuseelementes anliegt. Die Dichtung liegt dabei radial innenliegend zu den Öffnungen an der Flanschfläche an. Dadurch wird eine dichtende Verbindung zwischen den drei Gehäuseteilen sichergestellt.

Vorteilhaft ist es, wenn die Dichtung in einer Nut des jeweiligen Gehäuseteils und des Zwischengehäuseelementes, welche auf den gegenüberliegenden Flanschflächen ausgebildet ist, angeordnet ist. Die Dichtung hat dabei eine axiale Abmessung, welche größer als die Tiefe der Nut ist, so dass die Dichtung die Nut überragt. Dadurch wird die Dichtung in einer Position fixiert, so dass dauerhaft eine dichtende Verbindung gewährleistet werden kann.

In einer weiteren bevorzugten Ausführung ist der Antriebsmotor ein Elektromotor, da dieser eine hohe Stellgenauigkeit sicherstellt.

Es wird somit eine Stellvorrichtung für eine Verbrennungskraftmaschine geschaffen, welche einfacher und wirtschaftlicher herstellbar ist, indem die Montage vereinfacht wird. Zusätzlich wird die Lebensdauer erhöht, da die Räume gegeneinander weitestgehend abgedichtet sind und Schwingungen innerhalb der Stellvorrichtung vermieden werden.

Weitere Einzelheiten und Vorteile der vorliegenden Erfindung ergeben sich aus der nachfolgenden Beschreibung des Ausführungsbeispiels in Verbindung mit den Zeichnungen. In diesen zeigen:
Figur 1: Explosionszeichnung der erfindungsgemäßen Stellvorrichtung für eine Verbrennungskraftmaschine, und
Figur 2: Weitere Explosionszeichnung der erfindungsgemäßen Stellvorrichtung nach Figur 1.

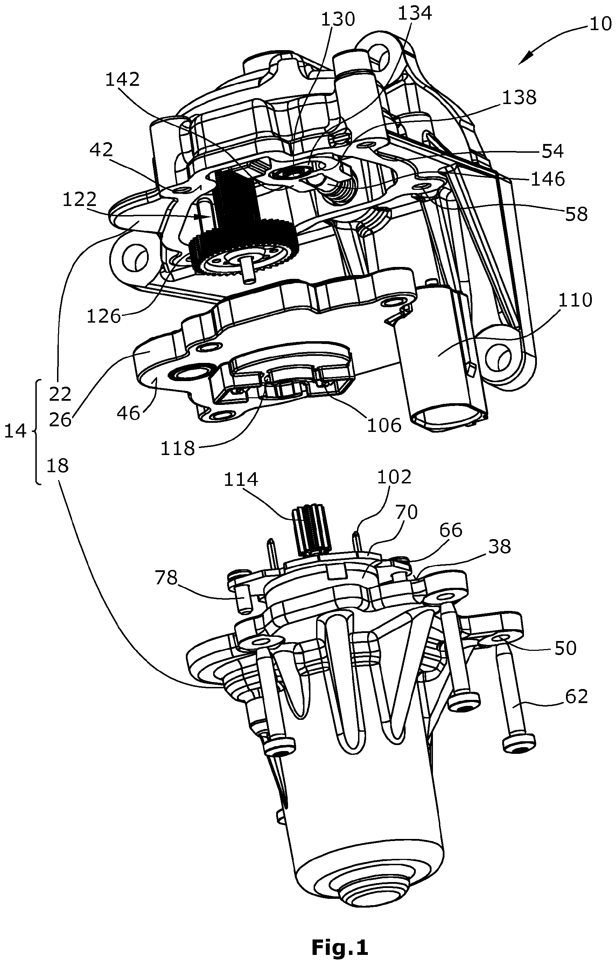

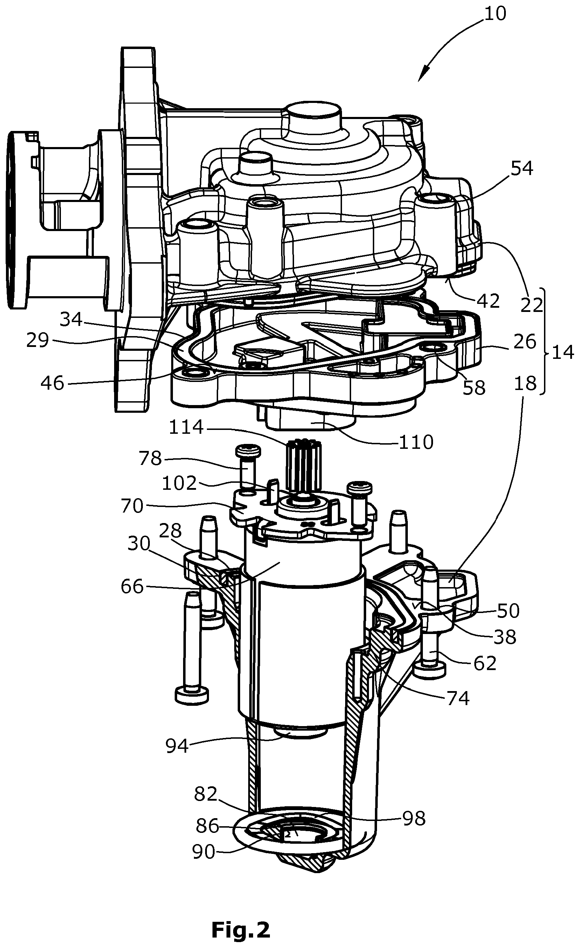

Die Figur 1 zeigt eine Stellvorrichtung 10 zum Antrieb eines AGR-Ventils für eine Verbrennungskraftmaschine nach der vorliegenden Erfindung. Die Stellvorrichtung 10 umfasst ein Gehäuse 14, welches aus einem ersten Gehäuseteil 18, einem zweiten Gehäuseteil 22 und einem Zwischengehäuseelement 26 gebildet ist. Das Zwischengehäuseelement 26, welches aus Kunststoff gebildet ist, ist dabei unter Zwischenlage einer Dichtung 28, 29, welche in einer Nut 30, 34 (siehe Figur 2) an einer Flanschfläche 38, 46 am ersten Gehäuseteil 18 und dem Zwischengehäuseelement 26 angeordnet ist, zwischen dem ersten Gehäuseteil 18 und dem zweiten Gehäuseteil 22 angeordnet. Das erste Gehäuseteil 18, das zweite Gehäuseteil 22 und das Zwischengehäuseelement 26 weisen Flanschflächen 38, 42, 46, in denen als Löcher ausgebildete Öffnungen 50, 54, 58 vorgesehen sind, auf. Ein durch die Löcher 50, 54, 58 in jeder Flanschfläche 38, 42, 46 gebildetes Lochmuster ist dabei einheitlich, so dass die Löcher 50, 54, 58 in einem zusammengebauten Zustand fluchten. Dadurch können die Gehäuseteile 18, 22 und das Zwischengehäuseelement 26 über gemeinsame Schrauben 62 miteinander verschraubt werden.

In Figur 2 ist eine Schnittdarstellung des ersten Gehäuseteils 18 gezeigt. In dem ersten Gehäuseteil 18 ist ein als Antriebsmotor 66 dienender Elektromotor angeordnet, der an einem zum Zwischengehäuseelement 26 weisenden axialen Ende eine Befestigungsplatte 70 aufweist, über die der Elektromotor 66 an einem Befestigungsflanschabschnitt 74 des ersten Gehäuseteils 18 mittels Befestigungsschrauben 78 in axialer Richtung verschraubt ist, so dass der Elektromotor 66 in axialer Richtung gelagert ist. Das erste Gehäuseteil 18 weist zusätzlich an einem distalen Ende davon eine zylindrische Vertiefung 82 auf. Auf eine Zylindermantelfläche 86 der zylindrischen Vertiefung 82 ist ein ringförmiges Dämpfungselement 90 aufgebracht. In der zylindrischen Vertiefung 82 ist ein durch ein Lager des Elektromotors 66 gebildeter zylindrischer Vorsprung 94 aufgenommen. Dadurch ist der Elektromotor 66 radial gelagert und Schwingungen werden durch das zwischen Vertiefung 82 und Vorsprung 94 angeordnete Dämpfungselement 90 gedämpft.

Um die Vertiefung 82 in dem ersten Gehäuseteil 18 ist konzentrisch eine Wellfeder 98 angeordnet, über die der Elektromotor 66 in axialer Richtung beim Verschrauben vorgespannt wird.

Der Elektromotor 66 weist elektrische Kontaktelemente 102 auf, welche durch Aussparungen in der Befestigungsplatte 70 hindurchtreten (siehe Figur 2). Zum Bestromen des Elektromotors 66 sind die Kontaktelemente 102 in einem zusammengebauten Zustand direkt in Kontakt mit Steckkontakten 106 (siehe Figur 1), welche in dem Zwischengehäuseelement 26 angeordnet sind und welche an dem Zwischengehäuseelement 26 ausgebildeten Buchse 110 verbunden sind über welche eine elektrische Spannungsversorgung erfolgt. Die Buchse 110 erstreckt sich orthogonal zu einer durch das Zwischengehäuseelement 26 ausgebildeten Ebene.

Der Elektromotor 66 weist zusätzlich ein Antriebsritzel 114 auf, welches sich in der axialen Richtung des Elektromotors 66 in Richtung des zweiten Gehäuseteils 22 erstreckt. In einem zusammengebauten Zustand tritt das Antriebsritzel 114 durch eine Öffnung 118 in dem Zwischengehäuseelement 26, so dass das Antriebsritzel 114 in ein Getriebe 122 (siehe Figur 1), welches in dem zweiten Gehäuseteil 22 angeordnet ist, eingreift. Das Getriebe 122 umfasst ein Doppelzahnrad 126 und ein Stirnrad (nicht gezeigt), welches mechanisch mit dem Doppelzahnrad 126 im Eingriff ist. Exzentrisch zu einer Welle (nicht gezeigt) des Stirnrades ist über ein Exzenterelement (nicht gezeigt), welches auf der Welle des Stirnrades befestigt ist, eine Ausgangswelle 130 des Exzenterelementes angeordnet. Auf der Ausgangswelle 130 ist ein Lager 134 platziert, welches in einer Kulisse 138 eines Kopplungselementes 142 läuft, an dem ein Betätigungsorgan 146 in Form einer Ventilstange befestigt ist.

Die beschriebene erfindungsgemäße Stellvorrichtung ist somit einfacher und wirtschaftlicher herstellbar, da die Teileanzahl gering gehalten wird und der Zusammenbau vereinfacht ist.

Es sollte deutlich sein, dass der Schutzbereich nicht auf das beschriebene Ausführungsbeispiel einer Stellvorrichtung beschränkt ist, sondern verschiedene Modifikationen und konstruktive Änderungen denkbar sind. Beispielsweise sind Ausgestaltungen denkbar, bei welchen die Buchse in einem anderen Winkel zu der Ebene des Zwischengehäuseelementes ausgerichtet ist.

### Bezugszeichenliste

- 10: Stellvorrichtung
- 14: Gehäuse
- 18: erstes Gehäuseteil
- 22: zweites Gehäuseteil
- 26: Zwischengehäuseelement
- 28: Dichtung
- 29: Dichtung
- 30: Nut
- 34: Nut
- 38: Flanschfläche
- 42: Flanschfläche
- 46: Flanschfläche
- 50: Öffnung
- 54: Öffnung
- 58: Öffnung
- 62: Schraube
- 66: Antriebsmotor
- 70: Befestigungsplatte
- 74: Befestigungsflanschabschnitt
- 78: Befestigungsschraube
- 82: Vertiefung
- 86: Zylindermantelfläche
- 90: Dämpfungselement
- 94: Vorsprung
- 98: Wellfeder
- 102: Kontaktelement
- 106: Steckkontakt
- 110: Buchse
- 114: Antriebsritzel
- 118: Öffnung
- 122: Getriebe
- 126: Doppelzahnrad
- 130: Ausgangswelle
- 134: Lager
- 138: Kulisse
- 142: Kopplungselement
- 146: Betätigungsorgan

## Patentansprüche

1. Stellvorrichtung (10) für eine Verbrennungskraftmaschine umfassend:
- ein erstes Gehäuseteil (18),
- einen Antriebsmotor (66), welcher in dem ersten Gehäuseteil (18) in einer axialen und einer radialen Richtung gelagert ist,
- ein Zwischengehäuseelement (26),
und
- ein zweites Gehäuseteil (22), in dem ein Raum mit einer offenen Seite ausgebildet ist, wobei, das erste Gehäuseteil (18), das zweite Gehäuseteil (22) und das Zwischengehäuseelement (26) korrespondierende Öffnungen (50, 54, 58) mit einem einheitlichen Lochmuster aufweisen und das erste Gehäuseteil (18) mit dem zweiten Gehäuseteil (22) unter Zwischenlage des Zwischengehäuseelementes (26) miteinander verschraubt sind, **dadurch gekennzeichnet, dass** der Antriebsmotor (66) über das Zwischengehäuseelement (26) elektrisch kontaktiert ist, und dass das Zwischengehäuseelement (26) den Raum des zweiten Gehäuseteils (22), in dem ein Getriebe (122) der Stellvorrichtung (10) angeordnet ist, zu der offenen Seite begrenzt.

2. Stellvorrichtung (10) nach Anspruch 1, **dadurch gekennzeichnet, dass** der Antriebsmotor (66) an einem proximalen axialen Ende eine Befestigungsplatte (70) aufweist, über welche der Antriebsmotor (66) an einem Befestigungsflanschabschnitt (74) des ersten Gehäuseteils (18), welcher im Inneren des ersten Gehäuseteils (18) ausgebildet ist, in axialer Richtung verschraubt ist.

3. Stellvorrichtung (10) nach Anspruch 1 oder 2, **dadurch gekennzeichnet, dass** der Antriebsmotor (66) an einem distalen axialen Ende einen durch ein Lager des Antriebsmotors (66) gebildeten Vorsprung (94) aufweist, der in einer Vertiefung (82) des ersten Gehäuseteils (18) aufgenommen und radial gehalten ist.

4. Stellvorrichtung (10) nach Anspruch 3, **dadurch gekennzeichnet, dass** zwischen dem Vorsprung (94) des Antriebsmotors (66) und der Vertiefung (82) ein Dämpfungselement (90) angeordnet ist.

5. Stellvorrichtung (10) nach Anspruch 3 oder 4, **dadurch gekennzeichnet, dass** im ersten Gehäuseteil (18), um die Vertiefung (82), eine Wellfeder (98) angeordnet ist, welche in einer axialen Richtung des Antriebsmotors (66) vorgespannt ist.

6. Stellvorrichtung (10) nach einem der vorherigen Ansprüche, **dadurch gekennzeichnet, dass** das erste Gehäuseteil (18) einteilig ausgebildet ist.

7. Stellvorrichtung (10) nach einem der vorherigen Ansprüche, **dadurch gekennzeichnet, dass** das erste Gehäuseteil (18) aus Aluminium gebildet ist.

8. Stellvorrichtung (10) nach einem der vorherigen Ansprüche, **dadurch gekennzeichnet, dass** am Zwischengehäuseelement (26) eine Buchse (110) für einen Stecker ausgebildet ist.

9. Stellvorrichtung (10) nach einem der vorherigen Ansprüche, **dadurch gekennzeichnet, dass** das Zwischengehäuseelement (26) aus Kunststoff gebildet ist.

10. Stellvorrichtung (10) nach einem der vorherigen Ansprüche, **dadurch gekennzeichnet, dass** ein Antriebsritzel (114) des Antriebsmotors (66) durch das Zwischengehäuseelement (26) in das zweite Gehäuseteil (22) ragt.

11. Stellvorrichtung (10) nach einem der vorherigen Ansprüche, **dadurch gekennzeichnet, dass** das erste und zweite Gehäuseteil (18, 22) jeweils eine Flanschfläche (38, 42), in der die korrespondierenden Öffnungen (50, 54, 58) angeordnet sind, aufweisen, welche unter Zwischenlage einer Dichtung (28, 29) an einer zu dem jeweiligen Gehäuseteil (18, 22) weisenden Fläche des Zwischengehäuseelementes (26) anliegt.

12. Stellvorrichtung (10) nach einem der vorherigen Ansprüche, **dadurch gekennzeichnet, dass** die Dichtung (28, 29) in einer Nut (30, 34) des jeweiligen Gehäuseteils (18, 22) und des Zwischengehäuseelementes (26), welche auf den gegenüberliegenden Flanschflächen (38, 46) ausgebildet ist, angeordnet ist.

13. Stellvorrichtung (10) nach einem der vorherigen Ansprüche, **dadurch gekennzeichnet, dass** der Antriebsmotor (66) ein Elektromotor ist.

## Claims

1. Actuating device (10) for an internal combustion engine comprising:
- a first housing part (18),
- a drive motor (66) supported in the first housing member (18) in an axial direction and a radial direction
- an intermediate housing member (26)
and
- a second housing part (22) in which a space is configured with an open side,
wherein
the first housing part (18), the second housing part (22) and the intermediate housing member (26) comprise corresponding openings (50, 54, 58) having a uniform hole pattern, and the first housing part (18) is screwed to the second housing part (22) with the intermediate housing element (26) interposed therebetween,
**characterized in that**
the drive motor (66) is electrically contacted via the intermediate housing element (26), and **in that** the intermediate housing element (26) delimits the space of the second housing part (22), in which a gear unit (122) of the actuating device (10) is arranged, to the open side.

2. Actuating device (10) according to claim 1,
**characterized in that**
the drive motor (66) comprises, at a proximal axial end, a mounting plate (70) through which the drive motor (66) is axially screwed to a mounting flange portion (74) of the first housing part (18) which is configured inside the first housing part (18).

3. Actuating device (10) according to claim 1 or 2,
**characterized in that**
the drive motor (66) comprises, at a distal axial end, a projection (94) formed by a bearing of the drive motor (66) and received and radially retained in a recess (82) of the first housing part (18).

4. Actuating device (10) according to claim 3,
**characterized in that**
a damping element (90) is arranged between the projection (94) of the drive motor (66) and the recess (82).

5. Actuating device (10) according to claim 3 or 4,
**characterized in that**
in the first housing part (18), around the recess (82), an corrugated spring (98) is arranged, which is preloaded in an axial direction of the drive motor (66).

6. Actuating device (10) according to one of the previous claims,
**characterized in that**
the first housing part (18) is configured in one piece.

7. Actuating device (10) according to one of the previous claims,
**characterized in that**
the first housing part (18) is made of aluminium.

8. Actuating device (10) according to one of the previous claims,
**characterized in that**
a socket (110) for a plug is configured on the intermediate housing element (26).

9. Actuating device (10) according to one of the previous claims,
**characterized in that**
the intermediate housing element (26) is made of plastics material.

10. Actuating device (10) according to one of the previous claims,
**characterized in that**
a drive pinion (114) of the drive motor (66) projects through the intermediate housing element (26) into the second housing part (22).

11. Actuating device (10) according to one of the previous claims,
**characterized in that**
the first and second housing parts (18, 22) comprise each a flange surface (38, 42), in which the corresponding openings (50, 54, 58) are arranged, which, under interposition of a seal (28, 29), bears against a surface of the intermediate housing element (26) facing the respective housing part (18, 22).

12. Actuating device (10) according to one of the previous claims,
**characterized in that**
the seal (28, 29) is arranged in a groove (30, 34) of the respective housing part (18, 22) and of the intermediate housing element (26), which is configured on the opposite flange surfaces (38, 46).

13. Actuating device (10) according to any one of the preceding claims,
**characterized in that**
the drive motor (66) is an electric motor.

## Revendications

1. Appareil de positionnement (10) pour un moteur à combustion interne comprenant :
- une première partie de boîtier (18),
- un moteur d'entraînement (66) qui est monté dans la première partie de boîtier (18) dans une direction axiale et une direction radiale,
- un élément de boîtier intermédiaire (26)
et
- une deuxième partie de boîtier (22) dans laquelle est défini un espace avec un côté ouvert,
dans laquelle
la première partie de boîtier (18), la deuxième partie de boîtier (22) et l'élément de boîtier intermédiaire (26) comprennent des ouvertures correspondantes (50, 54, 58) avec un pattern de trous uniforme et la première partie de boîtier (18) est vissée avec la deuxième partie de boîtier (22) avec l'élément de boîtier intermédiaire (26) intercalé,
**caractérisé en ce que**
**en ce que** le moteur d'entraînement (66) est en contact électrique par l'intermédiaire de l'élément de boîtier intermédiaire (26), et
**en ce que** l'élément de boîtier intermédiaire (26) délimite vers le côté ouvert l'espace de la deuxième partie de boîtier (22) dans laquelle est disposé un engrenage (122) de l'appareil de positionnement (10).

2. Appareil de positionnement (10) selon la revendication 1, **caractérisé en ce que** le moteur d'entraînement (66) comprend, à une extrémité axiale proximale, une plaque de fixation (70) par l'intermédiaire de laquelle le moteur d'entraînement (66) est vissé dans la direction axiale sur une partie de bride de fixation (74) de la première partie de boîtier (18) constituée à l'intérieur de la première partie de boîtier (18).

3. Appareil de positionnement (10) selon la revendication 1 ou 2, **caractérisé en ce que** le moteur d'entraînement (66) comprend, à une extrémité axiale distale, une projection (94) formée par un palier du moteur d'entraînement (66) qui est reçu et maintenu radialement dans une cavité (82) de la première partie de boîtier (18).

4. Appareil de positionnement (10) selon la revendication 3, **caractérisé en ce qu'**un élément d'amortissement (90) est disposé entre la projection (94) du moteur d'entraînement (66) et la cavité (82).

5. Appareil de positionnement (10) selon la revendication 3 ou 4, **caractérisé en ce que** dans la première partie de boîtier (18), autour de la cavité (82), est disposé un ressort ondulé (98) qui est précontraint dans une direction axiale du moteur d'entraînement (66).

6. Appareil de positionnement (10) selon l'une des revendications précédentes, **caractérisé en ce que** la première partie de boîtier (18) est réalisée d'une seule pièce.

7. Appareil de positionnement (10) selon l'une des revendications précédentes, **caractérisé en ce que** la première partie de boîtier (18) est formée en aluminium.

8. Appareil de positionnement (10) selon l'une des revendications précédentes, **caractérisé en ce qu'**une douille (110) pour une fiche est réalisée sur l'élément de boîtier intermédiaire (26).

9. Appareil de positionnement (10) selon l'une des revendications précédentes, **caractérisé en ce que** l'élément de boîtier intermédiaire (26) est formé en matière plastique.

10. Appareil de positionnement (10) selon l'une des revendications précédentes, **caractérisé en ce qu'**un pignon d'entraînement (114) du moteur d'entraînement (66) fait protrusion dans la deuxième partie de boîtier (22) à travers l'élément de boîtier intermédiaire (26).

11. Appareil de positionnement (10) selon l'une quelconque des revendications précédentes, **caractérisé en ce que** les première et deuxième parties de boîtier (18, 22) comprennent chacune une surface de bride (38, 42) dans laquelle sont disposées les ouvertures correspondantes (50, 54, 58), qui s'applique contre une surface de l'élément de boîtier intermédiaire (26) orientée vers la partie de boîtier respective (18, 22), avec interposition d'un élément d'étanchéité (28, 29).

12. Appareil de positionnement (10) selon l'une quelconque des revendications précédentes, **caractérisé en ce que** l'élément d'étanchéité (28, 29) est disposé dans une rainure (30, 34) de la partie de boîtier respective (18, 22) et de l'élément de boîtier intermédiaire (26), formée sur les surfaces de bride opposées (38, 46).

13. Appareil de positionnement (10) selon l'une quelconque des revendications précédentes, **caractérisé en ce que** le moteur d'entraînement (66) est un moteur électrique.
